# EUROPÄISCHE PATENTSCHRIFT

(11) **EP 2 150 796 B1**
(45) Veröffentlichungstag und Bekanntmachung des Hinweises auf die Patenterteilung: **30.09.2015**
(21) Anmeldenummer: 08758054.4
(22) Anmeldetag: 08.05.2008
(51) Int. Cl.: G01M 3/18

(54) **FÜHLERDRAHT**
SENSOR WIRE
FIL CAPTEUR

(30) Priorität: 23.05.2007 DE 102007024032
(43) Veröffentlichungstag der Anmeldung: 10.02.2010
(73) Patentinhaber: Brandes GmbH, 23701 Eutin (DE)
(72) Erfinder: BRANDES, Bernd, 23701 Eutin (DE)
(74) Vertreter: Lobemeier, Martin Landolf
(86) Internationale Anmeldenummer: PCT/DE2008/000798
(87) Internationale Veröffentlichungsnummer: WO 2008/141611

(56) Entgegenhaltungen:
- EP-A- 0 341 933
- DE-A1- 3 232 211
- DE-A1- 3 503 391
- DE-A1- 3 535 918
- FR-A- 2 645 274
- JP-A- 2005 166 402

## Beschreibung

Die Erfindung betrifft einen Fühlerdraht zum Detektieren einer Durchfeuchtung der thermischen Isolation einer Rohrleitung in einem Femwärmeverteilnetz, der ohne Bewehrung in die Isolation der Rohrleitung eingebracht ist, mit einer metallischen Ader und einer mit in regelmäßigem Abstand voneinander angeordneten Perforationen versehenen, die Ader umgebenden Ummantelung aus einem elektrisch isolierenden Kunststoff.

Derartige Fühleradem haben sich seit langem bewährt: sie liegen in dem das Rohr thermisch isolierenden Schaum und erkennen den Ort einer Leckage durch einen Abfall des Widerstands zwischen der - vorzugweise aus NiCr bestehenden - Fühlerader und dem Rohr oder einer Bezugsader.

Dies setzt voraus, dass die Feuchtigkeit durch die Perforationen in der Ummantelung die Ader erreicht, was dann, wenn die Ummantelung aus einem Material besteht, dessen Oberfläche hydrophob ist, also einen Kontaktwinkel um 90° hat (mit anderen Worten: schlecht benetzbar ist), nicht zuverlässig gewährleistet ist und die Ansprechsicherheit des Füblerdrahtes beeinträchtigt Dies kann sich insbesondere dann als problematisch erweisen, wenn das Wasser nur als Feuchtigkeit ansteht und/oder wenn das Material der Ummantelung beispielsweise PTFE (Teflon) ist, das als Ummantelung wegen seiner Beständigkeit an sich gut geeignet ist, dessen Oberfläche aber (auch) zu Wasser eine geringe Wechselwirkung hat

Aus der DE 35 03 391 A1 und aus der DE 32 32 211 ist das Detektieren von Durchfeuchtungen einer thermischen Isolation mit einer perforierten, elektrisch isolierenden Ummantelung bekannt. Aus der DE 35 35 918 A1 ist eine Leckage-Detektionseinrichtung bekannt, die einerseits einen blanken elektrischen Leiter und andererseits ein in einem Abstand zu diesem Leiter parallel angeordnetes Koaxialkabel mit einem Innenleiter, einem durch ein Geflecht gebildeten Außenleiter und einem isolierenden Material dazwischen aufweist. Eine weitere Vorrichtung zur Detektion von Feuchtigkeit ist aus der FR 2 645 274 bekannt.

Der Erfindung liegt die Aufgabe zugrunde, einen Fühlerdraht zu schaffen, bei dem die Ansprechsicherheit trotz der Verwendung eines hydrophoben Materials wie beispielsweise PTFE verbessert ist.

Erfindungsgemäß wird diese Aufgabe durch einen Fühlerdraht mit den Merkmalen gemäß Anspruch 1, Anspruch 2 oder Anspruch 3 gelöst.

Das Material kann Stoffe wie Tenside beinhalten, das Material kann aber ein aufgedampftes hydrophiles Metall sein.

Es wird also vorgeschlagen, die in einen Abstand von einem bis wenige Zentimeter mit kleinen Perforationen versehene Ummantelung mit einem Material zu beschichten, das entweder die Oberflächenspannung des Wassers herabsetzende Tenside beinhaltet oder aber bei dem Wasser aufgrund der höheren Wechselwirkung der Oberfläche des Materials mit Wasser einen kleinen Kontaktwinkel bildet, das also, mit anderen Worten, gut benetzbar ist. Dies lässt sich auf einfache Weise durch Beschichten des Materials mit einem bei Trocknung einen gut an der Ummantelung anhaftenden Film bildenden Polyvinylalkohol erreichen. Auch ein Bedampfen der Ummantelung mit einem hydrophilen Metall kommt in Betracht, was den weiteren Vorteil einer guter elektrischer Durchlässigkeit des sich bei der Beschichtung auf den Poren ablagernden Materials hat. Bei einem Einbringen der Perforationen nach dem Beschichten kann das Beschichtungsmaterial auch elektrisch isolierend sein.

## Patentansprüche

1. Fühlerdraht zum Detektieren einer Durchfeuchtung der thermischen Isolation einer Rohrleitung, der ohne Bewehrung in die Isolation der Rohrleitung eingebracht ist, mit einem metallischen Ader und einer mit in regelmäßigem Abstand voneinander angeordneten Perforationen versehenen, die Ader umgebenden Ummantelung aus einem elektrisch isolierenden Kunststoff,
**dadurch gekennzeichnet, dass**
die Ummantelung mit einem auf der Ummantelung haftenden, von Wasser gut benetzbaren hydrophilen Material beschichtet ist,
wobei das Material die Oberflächenspannung von Wasser herabsetzende Tenside beinhaltet.

2. Fühlerdraht zum Detektieren einer Durchfeuchtung der thermischen Isolation einer Rohrleitung, der ohne Bewehrung in die Isolation der Rohrleitung eingebracht ist, mit einem metallischen Ader und einer mit in regelmäßigem Abstand voneinander angeordneten Perforationen versehenen, die Ader umgebenden Ummantelung aus einem elektrisch isolierenden Kunststoff,
**dadurch gekennzeichnet, dass**
die Ummantelung mit einem auf der Ummantelung haftenden, von Wasser gut benetzbaren hydrophilen Material beschichtet ist,
wobei das Material ein sich bei Austrocknen bildender, an der Ummantelung anhaftender, von Wasser gut benetzbarer Film ist, der aus Polyvinylalkohol besteht.

3. Fühlerdraht zum Detektieren einer Durchfeuchtung der thermischen Isolation einer Rohrleitung, der ohne Bewehrung in die Isolation der Rohrleitung eingebracht ist, mit einem metallischen Ader und einer mit in regelmäßigem Abstand voneinander angeordneten Perforationen versehenen, die Ader umgebenden Ummantelung aus einem elektrisch isolierenden Kunststoff,
**dadurch gekennzeichnet, dass**
die Ummantelung mit einem auf der Ummantelung haftenden, von Wasser gut benetzbaren hydrophilen Material beschichtet ist,
wobei das Material ein aufgedampftes hydrophiles Metall ist.

## Claims

1. A sensor wire, for detecting moisture penetration of the thermal insulation of a pipeline, that has been introduced without sheathing into the insulation of the pipeline, having a metallic wire and a jacket surrounding the wire, made from an electrically insulating plastic and provided with perforations arranged at a regular distance from each other,
characterized it that
the jacket is coated with a hydrophilic material that adheres to the jacket and can be easily wetted by water,
the material containing surfactants that reduce the surface tension of water.

2. The sensor wire, for detecting moisture penetration of the thermal insulation of a pipeline, that has been introduced without sheathing into the insulation of the pipeline, having a metallic wire and a jacket surrounding the wire, made from an electrically insulating plastic and provided with perforations arranged at a regular distance from each other,
**characterized in that**
the jacket is coated with a hydrophilic material that adheres to the jacket and can be easily wetted by water,
the material being a film that forms on exsiccation, adheres to the jacket and can be easily wetted by water, that consists of polyvinyl alcohol.

3. The sensor wire, for detecting moisture penetration of the thermal insulation of a pipeline, that has been introduced without sheathing into the insulation of the pipeline, having a metallic wire and a jacket surrounding the wire, made from an electrically insulating plastic and provided with perforations arranged at a regular distance from each other,
**characterized in that**
the jacket is coated with a hydrophilic material that adheres to the jacket and can be easily wetted by water,
the material being a vapour-deposited hydrophilic material.

## Revendications

1. Fil métallique capteur permettant de détecter toute humidification de l'isolation themrique d'une conduite, inséré sans armature dans le système d'isolation de la conduite, doté d'une veine métallique et d'une enveloppe entourant la veine et dotée de perforations à intervalles réguliers, fabriquée dans un matériaux synthétique et électriquement isolant.,
**caractérisé en ce que**
l'enveloppe est couverte d'un matériau hydrophile, facile à imbiber d'eau et adhérant à l'enveloppe,
à savoir que ce matériau contient des agents tensioactifs réduisant la tension de surface de l'eau.

2. Fil métallique capteur permettant de détecter toute humidification de l'isolation themrique d'une conduite, inséré sans armature dans le système d'isolation de la conduite, doté d'une veine métallique et d'une enveloppe entourant la veine et dotée de perforations à intervalles réguliers, fabriquée dans un matériaux synthétique et électriquement isolant.,
**caractérisé en ce que**
l'enveloppe est couverte d'un matériau hydrophile, facile à imbiber d'eau et adhérant à l'enveloppe,
à savoir que le matériau est un film facile à imbiber d'eau se formant lors du séchage et adhérant à l'enveloppe, en alcool polyvinylique.

3. Fil métallique capteur permettant de détecter toute humidification de l'isolation themrique d'une conduite, inséré sans armature dans le système d'isolation de la conduite, doté d'une veine métallique et d'une enveloppe entourant la veine et dotée de perforations à intervalles réguliers, fabriquée dans un matériaux synthétique et électriquement isolant.,
**caractérisé en ce que**
l'enveloppe est couverte d'un matériau hydrophile, facile à imbiber d'eau et adhérant à l'enveloppe,
à savoir que le matériau est un métal hydrophile en phase vapeur.
